# EUROPEAN PATENT SPECIFICATION

(11) **EP 2 798 241 B1**
(45) Date of publication and mention of the grant of the patent: **06.04.2016**
(21) Application number: 12846815.4
(22) Date of filing: 26.12.2012
(51) Int. Cl.: F16H 57/02

(54) **A VEHICLE WITH A TRANSMISSION COVER FOR COVERING A TRANSMISSION SYSTEM OF AN INTERNAL COMBUSTION ENGINE**
FAHRZEUG MIT EINEM GETRIEBEDECKEL ZUM ABDECKEN EINES GETRIEBES EINER BRENNKRAFTMASCHINE
VEHICULE AVEC UN CARTER DE TRANSMISSION POUR COUVRIR UNE TRANSMISSION D'UN MOTEUR A COMBUSTION

(30) Priority: 27.12.2011 IN CH45872011
(43) Date of publication of application: 05.11.2014
(73) Proprietor: TVS Motor Company Limited, Chennai 600 006 (IN)
(72) Inventor: RAO, Kandregu, Chennai 600006 (IN)
(74) Representative: Patentanwaltskanzlei Matschnig & Forsthuber OG
(86) International application number: PCT/IN2012/000850
(87) International publication number: WO 2013/111152

(56) References cited:
- EP-A1- 1 767 831
- US-A1- 2004 123 596
- US-A1- 2009 084 224

## Description

### FIELD OF THE INVENTION

The present invention relates to a transmission system for an engine and more particularly to a transmission cover for housing a clutch and other associated transmission components in a four stroke single cylinder internal combustion engine.

### BACKGROUND OF THE INVENTION

A conventional two wheeled vehicle such as a motorcycle is powered by an internal combustion engine converting chemical energy into mechanical energy by combustion of air-fuel mixture within a combustion chamber of the engine. The engine includes crankcase halves (left and right), a crank chamber defined and formed therein by the crankcase halves, a crankshaft housed in the crank chamber and a cylinder block connected to the crankcase. In order to set the vehicle into motion, the power generated by the internal combustion engine is carried to a wheel of the vehicle, in a controllable way, through a transmission system. The transmission system, manually operated, generally comprises of a clutch, a gearbox containing gear train and a drive mechanism connecting the gear box to the wheel.

A transmission cover is positioned laterally and adjacent to the crankcase housing the clutch and gear actuation means. The known type of transmission cover covers one end of the crankshaft having a primary gear, an oil filter unit and primary driven gear attached to a multiplate clutch. It also supports kick starter shaft, locating clutch actuating lever, fitting clutch adjustment screw, cross holes for lubrication oil path and also include cavity for housing oil filter. The mating surface of the transmission cover is machined to mate with one of the crank case halves and clamped by screws.

However in case of an automatic transmission with electromechanically controlled actuators for gear shifting and clutch actuation provided with position detectors, they are usually mounted on a structural member such a frame and are connected to the engine through linkages to actuate the clutch and shift drum inside the engine crankcase. Such known automatic transmission systems are independent of the transmission cover and incapable to be supported on the transmission cover itself.

Therefore the challenge is to overcome one or more problems as set forth above by suitable redesign of transmission cover for compactness, better reliability and improved functionality and capable of accommodating the electromechanically controlled actuators on the transmission cover itself. There is also a need to develop a transmission cover which can be easily used for an automatic as well as manual transmission system without major modifications.

Document US 2009/0084224 is considered being the closest prior art and shows: a transmission cover for a transmission system of an internal combustion engine secured adjacent to a crankcase of the said engine and comprising: an outer surface projecting laterally, an inner surface internal to the inner surface defining a space to substantially cover the said transmission system, a clamping face facing the crankshaft for securing the transmission cover to the engine crankcase, side walls along the longitudinal axis of the transmission cover and further comprising: a first stepped bore on the said outer surface of the said transmission cover to house and secure a first electromechanical actuator, a second stepped bore formed on the said outer surface of the transmission cover to house and secure a second electromechanical actuator.

### SUMMARY OF THE INVENTION

It.is hence an objective of the present invention to disclose a transmission cover for an internal combustion engine capable to accommodate electrically operated actuators for an automatic transmission system. To this end, an embodiment of the present invention discloses a transmission cover secured adjacent to a crankcase of an internal combustion engine and comprising of an outer surface projecting laterally, an inner surface internal to the inner surface defining a space to substantially cover the said transmission system, a clamping face facing the crankshaft for securing the transmission cover to the engine crankcase, side walls along the longitudinal axis of the transmission cover and further comprising of a plurality of stepped bores, a flange on the outer face of the transmission cover to fit a detecting device for helping either of the actuators, a threaded opening on the upper portion of the side wall for mounting a knob used to check engine oil level, an extended cavity for housing an oil filter covered by an external face and an oil cavity formed by addition of wall adjacent to side walls which connect to extended cavity of oil filter housing provided in the inner face.

Another object of the present invention is to provide a transmission cover that can be used to cover either automatic or manual transmission components without major modifications.

The foregoing objectives and summary provide only a brief introduction to the present subject matter. To fully appreciate these and other objects of the present subject matter as well as the subject matter itself, all of which will become apparent to those skilled in the art, the ensuing detailed description of the invention and the claims should be read in conjunction with the accompanying drawings.

### BRIEF DESCRIPTION OF THE DRAWINGS

The above and other features, aspects, and advantages of the subject matter will be better understood with regard to the following description, appended claims and accompanying drawings where:
Figure 1 depicts a perspective view of a transmission cover assembly according to an embodiment of the present invention.
Figure 2 shows a top view of the transmission cover according to an embodiment of the present invention.
Figure 3a and 3b shows a rear view and a lateral view of the outer surface of the transmission cover according to an embodiment of the present invention.
Figure 4 shows an inner surface of the transmission cover according to an embodiment of the present invention.

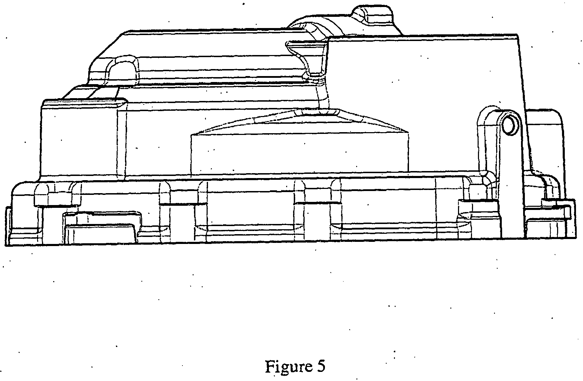

Figure 5 shows a bottom view of the transmission cover according to an embodiment of the present invention.
Figure 6a shows a front view of the transmission cover assembly according to an embodiment of the present invention.
Figure 6b shows a sectional view of the transmission cover of the Figure 6a sectioned along the axis X-X.
Figure 7 shows a perspective view of the transmission cover assembly according to an embodiment of the present invention.

### DETAILED DESCRIPTION OF THE INVENTION

The subject matter described herein relates to a transmission cover preferably for a single cylinder four stroke internal combustion engine which houses electrically operated clutch actuation and gear actuation means. Various other features and embodiments of the transmission cover according to the present invention here will be discernible from the following further description thereof, set out hereunder. Further "front" and "rear", and "left" and "right" wherever referred to in the ensuing description refer to front and rear, and left and right directions as seen from the rear of the engine and looking forward. Furthermore, a "longitudinal" axis refers to a front to rear axis relative to the engine, while a "lateral" axis refers generally to a side to side, or left to right axis relative to the engine. The present invention is now described in detail in connection with the rendered drawings. The detailed explanation of the constitution of parts other than the invention which constitutes an essential part has been omitted at suitable places. But before that, it would be helpful to proceed about the construction of a typical internal combustion engine.

Typically an internal combustion engine in a two wheeled vehicle includes a crankcase assembly divided into two crankcase halves, a crank chamber being defined and formed by the crankcase halves, a crankshaft housed in the crank chamber and a cylinder block connected to the crankcase. A counter shaft is arranged in the crankcase halves flanked by transmission cover, the rotation of the crankshaft being transmitted to the counter shaft. A drive shaft is arranged rearward or upward (to make the engine compact) of the counter shaft in the crankcase halves, the driving wheel being attached to the drive shaft through chain and sprocket means. The counter shaft is connected to the drive shaft through a multi-plate clutch and a gear box. The gears in the gear box are shifted by a gear shift actuator selecting the desired gear ratio to be given to the drive shaft by actuating the clutch by a clutch actuation system as desired in the present subject matter. The gear shift actuator and clutch actuation system are respectively powered by electromechanical actuators.

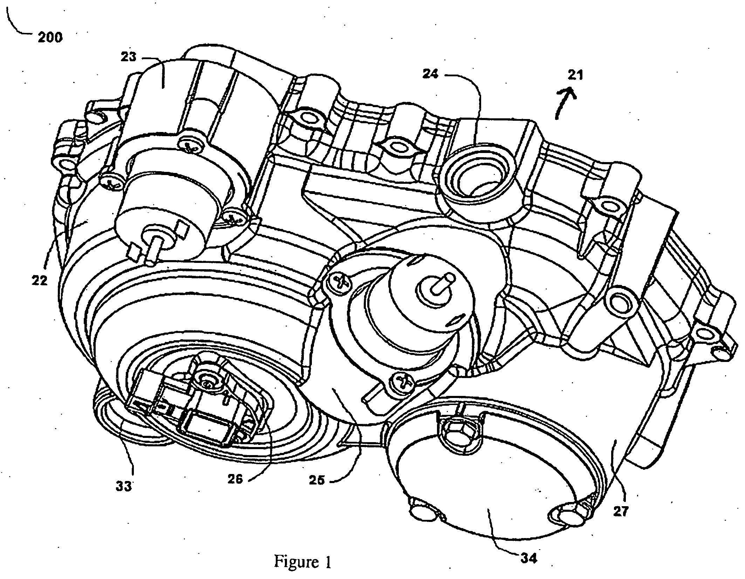

Figure 1 illustrates a perspective view of an embodiment of the present invention wherein a transmission cover **200** is located laterally and adjacent to the engine towards the clutch side. The transmission cover **200** consists of a clamping face **21** facing towards the engine crankshaft (not shown), side walls **22** along the longitudinal axis of the transmission cover, an outer surface of the transmission cover which is visible when viewed from the right side and an inner surface which remains invisible as it is internal to the outer surface. Further the transmission cover on the inner surface defines a space used to house and cover transmission components including clutch **41**. Figure 1 shows the outer surface of the transmission cover.

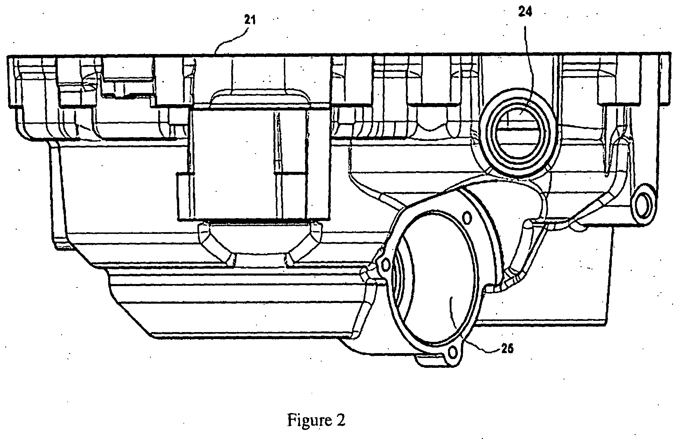

The transmission cover **200** has been endowed with various features to accommodate electrically operated actuators in the automatic transmission system. A first stepped bore **25** is provided on the outer surface of the transmission cover **200** with its long axis approximately parallel to the clamping face and adjacent to the clutch axis, to house and secure a first electromechanical actuator. A second stepped bore **23** is provided on the outer surface of the transmission cover at an upper portion with its long axis located perpendicular to the clamping face and parallel to the axis of the crankshaft, to house and secure a second electro mechanical actuator. The said first and second electromechanical actuators can be used for clutch or gear shift actuation and help to achieve automatic power transmission state. A flange **26** with a centre bore coinciding with the axis of the clutch is formed on the outer face of the transmission cover **200** to fit a detecting (sensor) device for helping either of the actuators. A kick shaft opening **33** is provided to support the kick shaft **38** for manually starting the vehicle. A threaded opening **24** on the top side wall is provided for mounting a knob used to check the engine oil level as seen in the top view of the transmission cover shown in Figure 2.

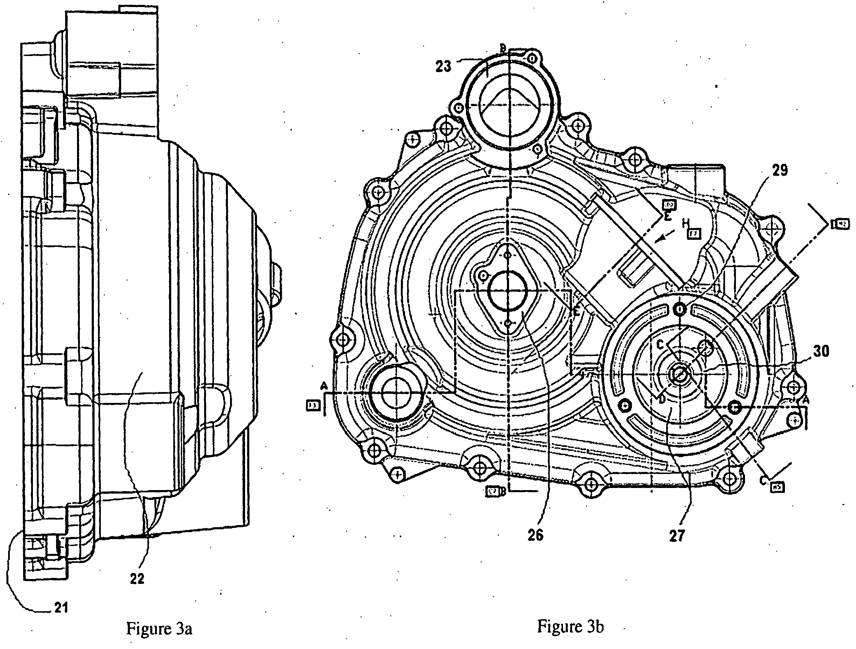

Figure 3b shows a lateral view of the transmission cover. An extended cavity **27** with a third stepped bore **30** is formed at a lower portion of the outer surface of the transmission cover for housing an oil filter (not shown). An external face **34** is secured on the edge on the above extended cavity **27** so as to cover the oil filter. The external face **34** is clamped to the extended cavity **27** at circumferential clamping points, one being shown by numeral **29**.

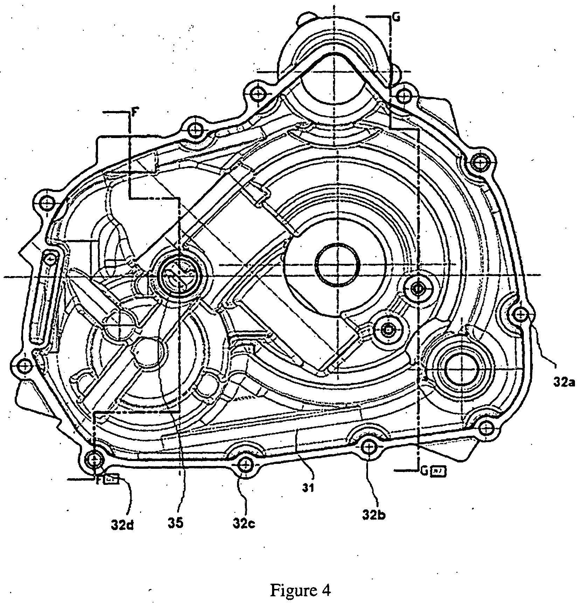

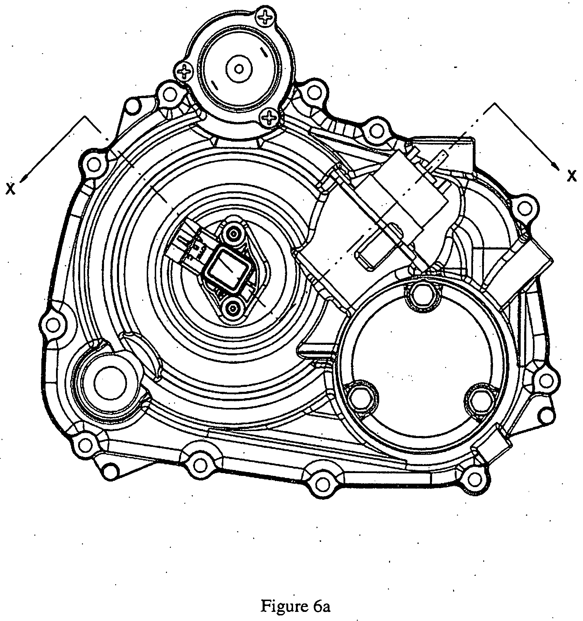

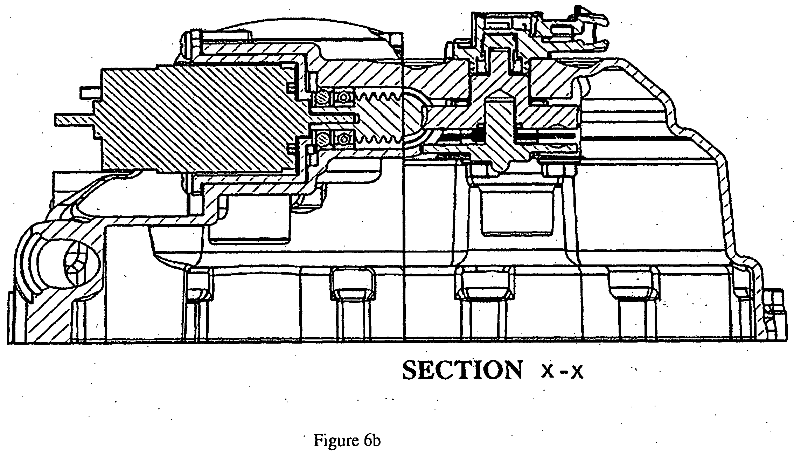

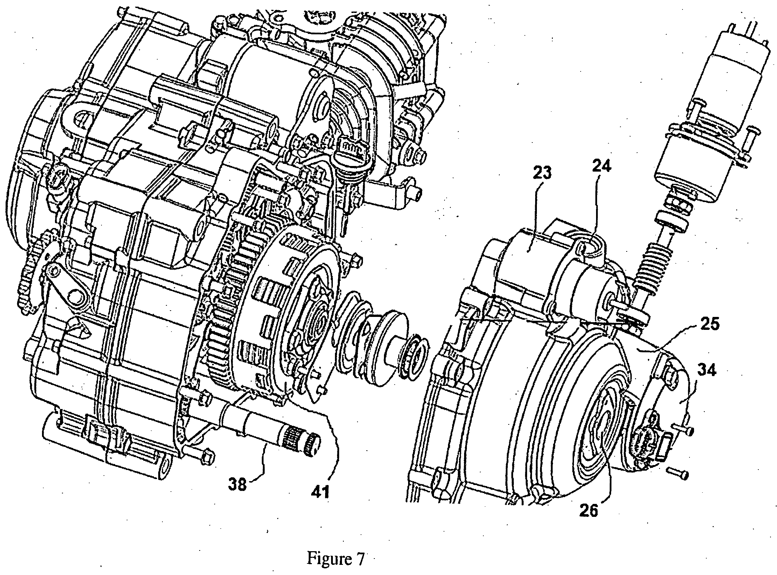

On the inner surface of the transmission cover **200**, a crankshaft hole **35** is positioned to house a right portion of the crankshaft. An oil cavity **31** is formed by addition of wall adjacent to side walls which connect to extended cavity of oil filter housing provided in the inner face. The transmission cover is secured to the crankcase at a plurality of clamping points, **32a, 32b, 32c** and **32d** to name a few, on the circumference of the clamping face **21** on the inner surface of the transmission cover **200** as shown in Figure 4. Figure 6a shows a complete view of the transmission cover according to an embodiment and Figure 6b shows the sectional view of the transmission cover along the axis X-X. Figure 7 shows the complete transmission cover assembly according to the present invention.

Further, the disclosed transmission cover is adjacent to the engine crankcase. In a preferred embodiment of the present invention, the transmission cover is suited for use with a two wheeled vehicle with a swinging engine. In this case, the anterior portion of the transmission cover is connected to the frame whereas the posterior portion of it is connected to the rear wheel of the vehicle. Moreover, the transmission cover is preferably fabricated from aluminium for quick heat dissipation during engine operation.

It will be appreciated that the present subject matter and its equivalent thereof offers many advantages, including those which have been described henceforth. Unlike the prior art, the transmission cover described here facilitates accommodation of the electromechanical actuators of an automatic transmission system on the transmission cover itself and without causing inconvenience to the rider of the vehicle. The actuators are firmly secured to the transmission cover. Further the said cover can also be used with the normal manual transmission system without any major modifications by plugging the unwanted openings by known mechanisms.

The present invention is thus described. The foregoing description of the invention including the embodiments thereof has been presented for the purpose of illustration and description. It is not intended to be exhaustive nor is it intended to limit the invention to the precise form disclosed. It will be apparent to those skilled in the art that the disclosed embodiments may be modified in light of the above description. The embodiments described are chosen to provide an illustration of principles of the invention and its practical application to enable thereby one of ordinary skill in the art to utilize the invention in various embodiments and with various modifications as are suited to the particular use contemplated. Therefore the forgoing description is to be considered exemplary, rather than limiting, and the true scope of the invention is that described in the appended claims.

## Claims

1. A vehicle with a transmission cover (200) for covering a transmission system of an internal combustion engine, the transmission cover secured adjacent to a crankcase of the engine and comprising: an outer surface projecting laterally, an inner surface internal to the outer surface defining a space to substantially cover the transmission system, a clamping face (21) facing a crankshaft of the engine for securing the transmission cover to the crankcase, side walls (22) along the longitudinal axis of the transmission cover and further comprising:
a first stepped bore (25) on the outer surface of the transmission cover (200) with its long axis approximately parallel to the clamping face (21) and adjacent to a clutch axis to house and secure a first electromechanical actuator,
a second stepped bore (23) formed on the outer surface of the transmission cover (200) at an upper portion with its long axis approximately perpendicular to the clamping face (21) and parallel to a long axis of the crankshaft to house and secure a second electro mechanical actuator,
a flange (26) with a centre bore coinciding with the clutch axis and formed on the outer face of the transmission cover (200) to fit a detecting device for helping either of the actuators,
a threaded opening (24) on an upper portion of the side wall (22) for mounting a knob used to check engine oil level,
an extended cavity (27) with a third stepped bore (30) provided at a lower portion of the outer surface of the transmission cover for housing an oil filter,
an external face (34) secured on the edge on the extended cavity (27) so as to cover the oil filter, and
an oil cavity (31) formed by addition of a wall adjacent to the side walls (22) which connect to the extended cavity (27) of the oil filter housing provided in the inner surface.

2. The vehicle as claimed in claim 1 wherein the engine is preferably a single cylinder four stroke swinging engine.

3. The vehicle as claimed in claim 1 wherein the anterior portion of the transmission cover (200) is secured to a frame of the vehicle and the posterior portion is connected to the rear wheel of the vehicle.

4. The vehicle as claimed in claim 1 wherein the vehicle includes a scooter type motorcycle.

5. The vehicle as claimed in claim 1 wherein the transmission system (200) is substantially mounted inside the transmission cover.

## Patentansprüche

1. Fahrzeug mit Getriebedeckel (200) zum Abdecken eines Getriebes eines Verbrennungsmotors, wobei der Getriebedeckel neben einem Kurbelgehäuse des Motors befestigt ist und umfasst: eine seitlich vorstehende Außenfläche, eine Innenfläche, die innerhalb der Außenfläche liegt und einen Raum definiert, in dem das Getriebe im Wesentlichen abgedeckt ist, eine einer Kurbelwelle des Motors zugewandte Feststellfläche (21) zum Befestigen des Getriebedeckels an dem Kurbelgehäuse, Seitenwände (22) entlang der Längsachse des Getriebedeckels, und zudem umfassend:
eine erste gestufte Öffnung (25) auf der Außenfläche des Getriebedeckels (200), deren Längsachse annähernd parallel zur Feststellfläche (21) und neben einer Kupplungsachse liegt, zum Aufnehmen und Befestigen eines ersten elektromechanischen Aktors,
eine auf der Außenfläche des Getriebedeckels (200) an einem oberen Bereich gebildete zweite gestufte Öffnung (23), deren Längsachse annähernd senkrecht zur Feststellfläche (21) und parallel zu einer Längsachse der Kurbelwelle liegt, zum Aufnehmen und Befestigen eines zweiten elektromechanischen Aktors,
einen Flansch (26) mit einer mittigen Öffnung, die mit der Kupplungsachse übereinstimmt und auf der Außenfläche des Getriebedeckels (200) gebildet ist, zum Anbringen eines Detektorgeräts zur Unterstützung eines der beiden Aktoren,
eine Gewindeöffnung (24) auf einem oberen Bereich der Seitenwand (22) zum Anbringen eines Knaufs zur Verwendung bei der Prüfung des Motor-Ölstands,
einen erweiterten Hohlraum (27) mit einer dritten gestuften Öffnung (30), die zum Aufnehmen eines Ölfilters an einem unteren Bereich der Außenfläche des Getriebedeckels vorgesehen ist,
eine Außenfläche (34), die an der Kante auf dem erweiterten Hohlraums (27) befestigt ist, um das Ölfilter abzudecken,
einen Ölhohlraum (31), der durch Hinzufügen einer Wand neben den Seitenwänden (22) gebildet ist, die mit dem erweiterten Hohlraum (27) des in der Innenfläche vorgesehenen Ölfilter-Gehäuses in Verbindung stehen.

2. Fahrzeug gemäß Anspruch 1, bei welchem der Motor vorzugsweise ein Viertakt-Einzylinder-Motor mit Schwinge ist.

3. Fahrzeug gemäß Anspruch 1, bei welchem der Vorderteil des Getriebedeckels (200) an einem Rahmen des Fahrzeugs befestigt ist und der Hinterteil mit dem Hinterrad des Fahrzeugs verbunden ist.

4. Fahrzeug gemäß Anspruch 1, bei welchem das Fahrzeug ein Motorrad vom Typ eines Motorrollers einschließt.

5. Fahrzeug gemäß Anspruch 1, bei welchem das Getriebesystem (200) im Wesentlichen innerhalb des Getriebedeckels montiert ist.

## Revendications

1. Véhicule ayant un carter de transmission (200) pour recouvrir un système de transmission d'un moteur à combustion interne, le carter de transmission étant fixé adjacent à un carter moteur du moteur et comprenant : une surface externe se projetant latéralement, une surface interne, interne à la surface externe, définissant un espace pour recouvrir sensiblement le système de transmission, une face de serrage (21) tournée vers un carter moteur du moteur pour fixer le carter de transmission au carter moteur, des parois latérales (22) le long de l'axe longitudinal du carter de transmission et comprenant en outre :
un premier alésage étagé (25) sur la surface externe du carter de transmission (200), avec son axe long approximativement parallèle à la face de serrage (21) et adjacent à un axe d'embrayage pour recevoir et fixer un premier actionneur électromécanique,
un deuxième alésage étagé (23) formé sur la surface externe du carter de transmission (200) à une partie supérieure, avec son axe long approximativement perpendiculaire à la face de serrage (21) et parallèle à un axe long du carter moteur pour recevoir et fixer un second actionneur électromécanique,
une bride (26) avec un alésage central coïncidant avec l'axe d'embrayage et formée sur la face externe du carter de transmission (200) pour adapter un dispositif de détection destiné à aider l'un ou l'autre des actionneurs,
une ouverture filetée (24) sur une partie supérieure de la paroi latérale (22) pour le montage d'un bouton utilisé pour vérifier le niveau d'huile moteur,
une cavité étendue (27) avec un troisième alésage étagé (30) prévue à une partie inférieure de la surface externe du carter de transmission pour recevoir un filtre à huile,
une face externe (34) fixée sur le bord sur la cavité étendue (27) de façon à recouvrir le filtre à huile, et
une cavité d'huile (31) formée par ajout d'une paroi adjacente aux parois latérales (22) qui sont reliées à la cavité étendue (27) du logement de filtre à huile disposé dans la surface interne.

2. Véhicule selon la revendication 1, dans lequel le moteur est, de préférence, un moteur oscillant quatre temps monocylindre.

3. Véhicule selon la revendication 1, dans lequel la partie antérieure du carter de transmission (200) est fixée à un châssis du véhicule et la partie postérieure est reliée à la roue arrière du véhicule.

4. Véhicule selon la revendication 1, dans lequel le véhicule comprend une motocyclette de type scooter.

5. Véhicule selon la revendication 1, dans lequel le système de transmission (200) est monté sensiblement à l'intérieur du carter de transmission.
